# EUROPEAN PATENT APPLICATION

(11) **EP 2 911 038 A1**
(43) Date of publication of application: **26.08.2015**
(21) Application number: 13847607.2
(22) Date of filing: 30.09.2013
(51) Int. Cl.: G06F 3/01

(54) **TERMINAL AND METHOD FOR THE CONTROL THEREOF**

(30) Priority: 17.10.2012 CN 201210393892
(71) Applicant: ZTE Corporation, Shenzhen, Guangdong 518057 (CN)
(72) Inventor: CHEN, Jianjiang, Shenzhen Guangdong 518057 (CN); KAN, Yulun, Shenzhen Guangdong 518057 (CN); XIAO, Qihu, Shenzhen Guangdong 518057 (CN)
(74) Representative: Zimmermann, Tankred Klaus
(86) International application number: PCT/CN2013/084770
(87) International publication number: WO 2014/059882

(57) **Abstract**

A terminal and method for controlling the terminal are provided to resolve the problem of poor versatility of current terminal-control technology. The method includes: the pressure acting upon a terminal is collected and pressure information is obtained by calculating the collected pressure; a control operation mapping table is invoked, wherein the control operation mapping table contains at least one item of standard pressure information and a control operation command corresponding to said standard pressure information; it is determined whether the control operation mapping table contains standard pressure information matching the pressure information and, if such standard pressure information exists, the control operation command corresponding to the standard pressure information is invoked and executed. Implementation of the present invention provides an operational method which can be used in any scenario to control a terminal, while also solves the current problem of a user being unable to control a terminal with one hand, thus providing a user with a more convenient terminal operation method and improving the user experience.

## Description

### TECHNICAL FIELD

The present disclosure relates to a terminal application field, and in particular, to a terminal and an operation method for controlling the terminal.

### BACKGROUND

With the rapid development of technologies, the service functions of handheld terminals, such as a mobile phone, are more and more strong, and meanwhile the display screens (touch screens) thereof also become bigger and bigger; while increasingly large touch screens satisfy usage needs of users, some disadvantageous influences are also brought, such as the problem that the touch screens (keyboards) being too large requires the users to operate with two hands at the same time (one hand holding a terminal device, and another hand performing a control operation).

In order to liberate the user's hands, current technical persons provide a voice recognition control technology or a facial recognition control technology, and this kind of control technologies cannot serve the users well enough in special scenarios, for example, during the time of night rest, the voice recognition control technology will obviously disturb rest of others, and the camera effect of the facial recognition control technology is poor.

Therefore, how to provide a terminal control technology which can be used in any environment is a pending decision to be solved by a person skilled in the art.

### SUMMARY

In order to solve the problem of poor versatility existed in the current terminal control technology, the embodiments of the disclosure provide a terminal and an operation method for controlling the terminal.

In one embodiment, the operation method for controlling the control terminal provided in the embodiments of the disclosure includes the following steps of:
the pressure acting upon the terminal is collected and the pressure information is obtained by calculating the pressure;
a control operation mapping table is invoked, wherein the control operation mapping table contains at least one item of standard pressure information and a control operation command corresponding to the standard pressure information; and
it is determined whether the control operation mapping table contains standard pressure information matching the pressure information and, if the standard pressure information exists, the control operation command corresponding to the standard pressure information is invoked and executed.

Further, in the operation method for controlling the terminal as shown in the above-mentioned embodiments, the step of establishing the control operation mapping table is further comprised before collecting the pressure, and the step includes:
the control operation command is acquired, and the standard pressure information corresponding to each control operation command which is input by a user is acquired;
a corresponding relationship between the control operation command and the standard pressure information is established; and
the control operation mapping table is established according to the corresponding relationship.

Further, in the operation method for controlling the terminal as shown in the above-mentioned embodiments, if the standard pressure information matching the pressure information exists, before executing the control operation command corresponding to the standard pressure information, further includes:
it is determined whether a trigger condition of the control operation command is satisfied; and
if the trigger condition satisfied, then the control operation command is executed.

Further, in the operation method for controlling the terminal as shown in the above-mentioned embodiments, the trigger condition includes at least one of a terminal running state, terminal location information and terminal motion information.

Further, in the operation method for controlling the terminal as shown in the above-mentioned embodiments, the manner of collecting pressure acting upon the terminal is a single pressure collection unit performing pressure collection.

Further, in the operation method for controlling the terminal as shown in the above-mentioned embodiments, the manner of collecting pressure acting upon the terminal is two or more than two pressure collection units performing pressure collection.

Further, in the operation method for controlling the terminal as shown in the above-mentioned embodiments, when two or more than two pressure collection units perform pressure collection, the process of determining whether the control operation mapping table contains standard pressure information matching the pressure information is:
It is determined whether the pressure information of multiple collection units is matched;
if it is matched, then it is further determined whether the operation mapping table contains standard pressure information corresponding to at least one item of pressure information in each collection unit or the pressure information of all collection units; if such standard pressure information exists, then executing the control operation command corresponding to the standard pressure information is executed.

Further, in the operation method for controlling the terminal as shown in the above-mentioned embodiments, the step of setting the priority of each pressure collection unit is further comprised; according to the pressure collected by the pressure collection units of different priorities, control operation commands of different application levels corresponding to the acquired pressure information are calculated.

Further, in the operation method for controlling the terminal as shown in the above-mentioned embodiments, the pressure information is a pressure value and/or pressure variation trend and/or pressure duration time.

In order to better apply the above-mentioned operation method for controlling the terminal, the embodiments of the disclosure further provide a terminal; in one embodiment, the terminal includes a collection module, a calculation module, a determination module and an execution module, wherein the collection module, calculation module, determination module and execution module are successively connected in sequence; and
the collection module is configured to collect the pressure acting upon the terminal, and transmit the collected pressure to the calculation module;
the calculation module is configured to calculate the received pressure, obtain pressure information corresponding to the pressure and transmit same to the determination module;
the determination module is configured to invoke a control operation mapping table, determine whether the control operation mapping table contains standard pressure information matching the received pressure information and, if the information exists, then the control operation command corresponding to the standard pressure information is transmitted to the execution module, wherein the control operation mapping table contains at least one item of standard pressure information and the control operation command corresponding to the standard pressure information; and
the execution module is configured to receive and execute the control operation command transmitted by the determination module.

Further, the terminal as shown in the above-mentioned embodiments further includes a storage module; at the moment,
the collection module is further configured to acquire a control operation command, and acquire standard pressure information corresponding to each control operation command which is input by a user, and transmit the control operation command and the standard pressure information corresponding to the control operation command to the calculation module;
the calculation module is further configured to establish a corresponding relationship between the control operation command and standard pressure information according to the received control operation command and the standard pressure information corresponding to the control operation command, and transmit the corresponding relationship to the storage module; and
the storage module is configured to establish a control operation mapping table according to the corresponding relationship.

Further, the terminal as shown in the above-mentioned embodiments further includes a detection module; at the moment,
the detection module is connected to the determination module, and configured to, when the determination module determines that the standard pressure information matching the pressure information exists and before the control operation command corresponding to the standard pressure information is executed, detect whether the trigger condition of the control operation command is satisfied; and if satisfied, then the execution module is notified to execute the control operation command.

Further, in the terminal as shown in the above-mentioned embodiments, the collection module contains a pressure collection unit, and the pressure collection unit is configured to collect the pressure acting upon the terminal.

Further, in the terminal as shown in the above-mentioned embodiments, the collection module contains at least two pressure collection units, and the pressure collection units are configured to collect the pressure acting upon the terminal.

Further, in the terminal as shown in the above-mentioned embodiments, the collection module further includes a level division unit, and the level division unit is configured to set the priority of each pressure collection unit; and the pressures collected by pressure collection units of different priorities are calculated, and the acquired pressure information corresponds to control operation commands of different levels.

Further, the terminal as shown in the above-mentioned embodiments is one of a mobile phone, a tablet computer and a game machine.

Through the embodiments of the disclosure, a terminal control technical solution is provided; the terminal control technical solution controls a terminal to execute operations by collecting pressure on the terminal by a user, and a terminal user can use it in any environment and does not influence others, which has good versatility; and further, the user can control the terminal with one hand, which avoids the problem in the prior art that a user needs two hands to control a terminal, and enhances usage experience of the user.

### BRIEF DESCRIPTION OF THE DRAWINGS

Fig. 1 is a structure diagram of a terminal 1 according to an embodiment of the disclosure;
Fig. 2 is a structure diagram of a terminal 1 according to an embodiment of the disclosure;
Fig. 3 is a structure diagram of a terminal 1 according to an embodiment of the disclosure;
Fig. 4 is a structure diagram of a terminal 1 according to an embodiment of the disclosure;
Fig. 5 is a structure diagram of a collection module 11 in the terminal 1 as shown in Fig. 1;
Fig. 6 is a structure diagram of a collection module 11 in the terminal 1 as shown in Fig. 1;
Fig. 7 is a structure diagram of a collection module 11 in the terminal 1 as shown in Fig. 1;
Fig. 8 is a structure diagram of a terminal 1 according to an optimal embodiment of the disclosure; and
Figure 9 is a flowchart of a method for controlling a terminal according to an embodiment of the disclosure.

### DESCRIPTION OF EMBODIMENTS

The embodiments of the disclosure provide a terminal control technical solution based on pressure for solving the problems of poor versatility of current control technologies based on voice or facial image as well as a key control technology being not convenient for operation with a single hand, so as to provide a more convenient terminal operation manner. The disclosure will be described in detail through the manner of referring to the accompanying drawings and specific embodiments hereinafter.

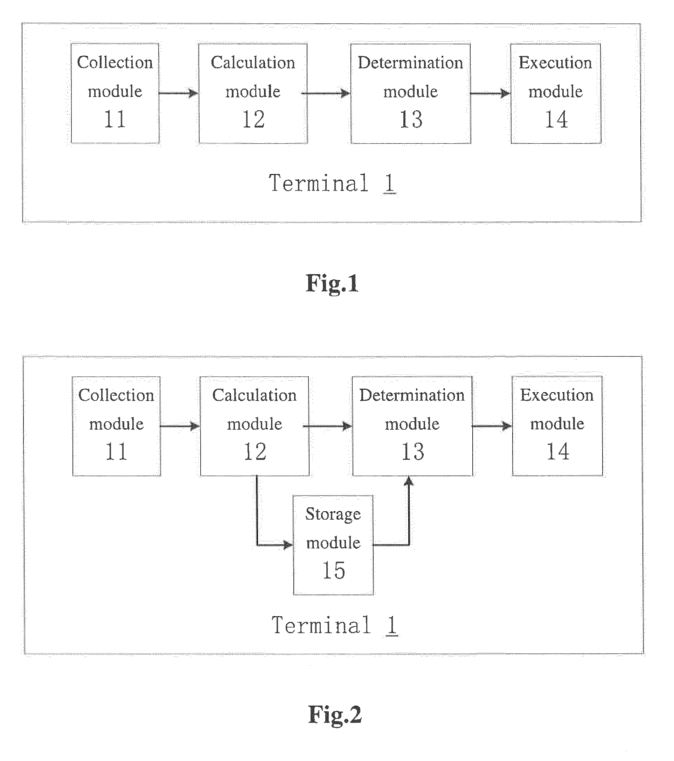

Fig. 1 is a structure diagram of a terminal 1 according to an embodiment of the disclosure; it can be seen from Fig. 1 that in an embodiment, the terminal 1 provided in the disclosure includes a collection module 11, a calculation module 12, a determination module 13 and an execution module 14; the collection module 11, the calculation module 12, the determination module 13 and the execution module 14 are successively connected in sequence; wherein
the collection module 11 is configured to collect the pressure acting upon the terminal 1, and transmit the collected pressure to the calculation module 12;
the calculation module 12 is configured to calculate the received pressure, obtain pressure information corresponding to the pressure and transmit same to the determination module 13;
the determination module 13 is configured to invoke a control operation mapping table, determine whether the control operation mapping table contains standard pressure information matching the received pressure information and, if the information exists, then the control operation command corresponding to the standard pressure information is transmitted to the execution module 14; and
the execution module 14 is configured to receive and execute the control operation command transmitted by the determination module 13.

In the above-mentioned embodiments, the control operation mapping table contains at least one item of standard pressure information, and the standard pressure information corresponds to the control operation command; in order to facilitate the determination module 13 to invoke the control operation mapping table, the present application can also store the control operation mapping table, and now the structure of the terminal 1 is as shown in Fig. 2.

In all the embodiments of the present application, the pressure information is a pressure value and/or pressure variation trend and/or pressure duration time.

Fig. 2 is a structure diagram of a terminal 1 according to an embodiment of the disclosure; it can be seen from Fig. 2 that in an embodiment, the terminal 1 shown in Fig. 1 further includes a storage module 15; and at the moment,
the collection module 11 is further configured to acquire a control operation command, and acquire standard pressure information corresponding to each control operation command which is input by a user, and transmit the control operation command and the standard pressure information corresponding to the control operation command to the calculation module 12;
the calculation module 12 is further configured to establish a corresponding relationship between the control operation command and standard pressure information according to the received control operation command and the standard pressure information corresponding to the control operation command, and transmit the corresponding relationship to the storage module 15; and
the storage module 15 is configured to receive the control operation command and standard pressure information corresponding to the control operation command, and establish, store and update the control operation mapping table according to the corresponding relationship between the standard pressure information and the control operation command.

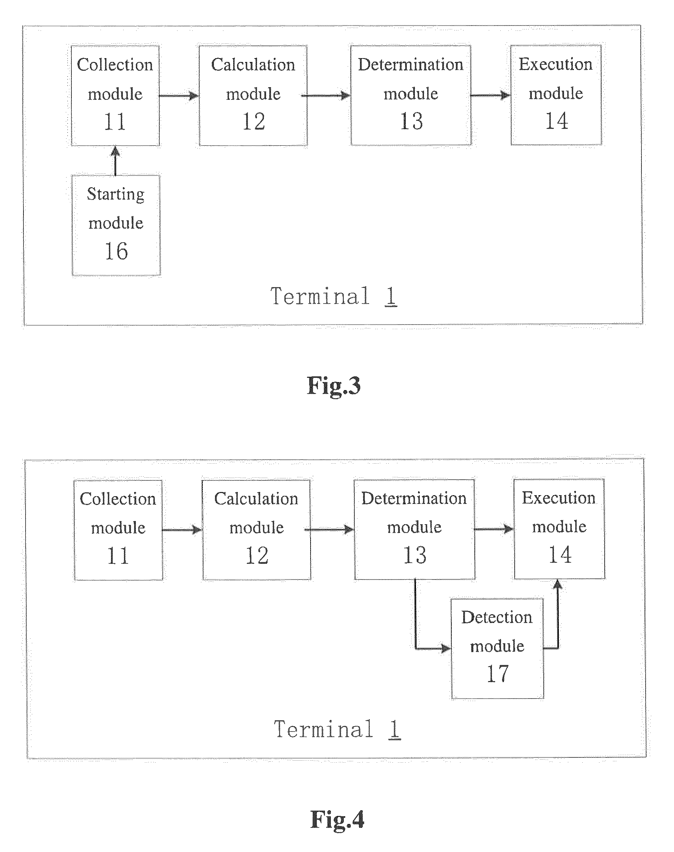

In order to facilitate a terminal user to select whether to start the application service, the present application also can set a starting function, and now the structure of the terminal 1 is as shown in Fig. 3.

Fig. 3 is a structure diagram of a terminal 1 according to an embodiment of the disclosure; it can be seen from Fig. 3 that in an embodiment, the terminal 1 shown in Fig. 1 further includes a starting module 16; and at the moment,
the starting module 16 is configured to start the collection module 11, the calculation module 12, the determination module 13 and the execution module 14 to work after receiving a starting command of a user; and when receiving a closing command of the user, the collection module 11, the calculation module 12, the determination module 13 and the execution module 14 are closed.

In order to make pressure information be accurate and avoid accidental operation, the present application may select to add a trigger condition to each control operation command, wherein the trigger condition is one or more of a terminal running state, terminal location information and terminal motion information; and in order to avoid accidental operation, the present application may add a function for detecting the trigger condition, as shown in Fig. 4.

Fig. 4 is a structure diagram of a terminal 1 according to an embodiment of the disclosure; it can be seen from Fig. 4 that in an embodiment, the terminal 1 shown in Fig. 1 further includes a detection module 17, wherein
the detection module 17 is connected to the determination module 13, and configured to, when the determination module 13 determines that the standard pressure information matching the pressure information exists and before the control operation command corresponding to the standard pressure information is executed by the execution module 14, detect whether the trigger condition of the control operation command is satisfied; and if satisfied, then the execution module 14 is notified to execute the control operation command; and
if the trigger condition is not satisfied, then the execution module 14 is disabled.

The trigger condition includes one or more of the terminal running state, terminal location information and terminal motion information, wherein the terminal running state may be state information about terminal sleep, terminal standby and terminal being in a running interface of a certain application program; the terminal location information may be location information about whether the terminal facing a user and a distance between the terminal from the user (ear or mouth); and the terminal motion information may be the terminal rotating at a certain speed, the terminal moving at a certain track, the terminal rotating at a certain angle, the length of movement distance of the terminal and the duration time of the terminal motion.

It can be anticipated that in the embodiment, the terminal 1 needs to check the trigger condition; therefore, when the terminal user sets a control operation mapping table, the same standard pressure information may be configured to correspond to multiple control operation commands, and different trigger conditions correspond to different control operation command, and a control operation which is actually desired to be performed by the user is detected by detecting the trigger condition; for example, one item of standard pressure information corresponds to an activation operation and an operation of answering a call at the same time, and when the terminal 1 obtains the pressure information, the trigger condition is further detected; when the trigger condition is the terminal sleep, a control operation command corresponding to the pressure information is to activate a terminal device; and when the trigger condition is the terminal standby, the control operation command corresponding to the pressure information is the operation of answering the call.

In order to describe the process of the terminal 1 collecting pressure, the structure of the collection module 11 is described in detail hereinafter.

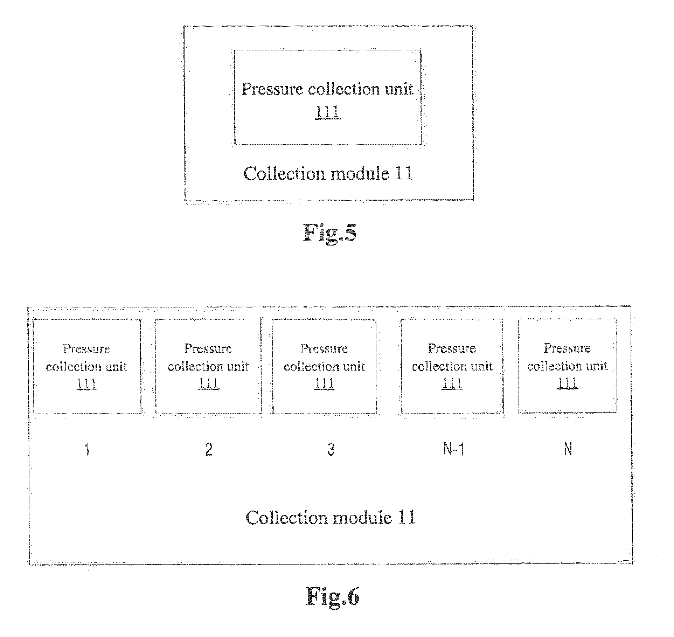

Fig. 5 is a structure diagram of a collection module 11 in the terminal 1 as shown in Fig. 1; it can be seen from Fig. 5 that in an embodiment, the collection module 11 merely contains a pressure collection unit 111, wherein the pressure collection unit is configured to collect the pressure applied to the terminal 1 by a user, and transfer the collected pressure to the calculation module 12. Since in the embodiment, the collection module 11 merely contains the pressure collection unit 111, and now pressure collection is fast, and the calculation module 12 may perform calculation rapidly so as to obtain pressure information, thereby realizing rapid control on the terminal 1. For example, the pressure information obtained through calculation of the calculation module 12 is a pressure variation trend, and when the pressure progressively increases, it represents a "confirmation" operation; when the pressure progressively decreases, it represents a "rejection" operation; and when the pressure firstly increases and then decreases, it represents a "cancel" operation.

Fig. 6 is a structure diagram of a collection module 11 in the terminal 1 as shown in Fig. 1; it can be seen from Fig. 6 that in an embodiment, the collection module 11 merely contains N pressure collection units 111 (N > 1), and at the moment, the N pressure collection units 11 mutually cooperate so as to realize rather complex control. For example, the pressure information obtained by the calculation module 12 is a pressure variation trend; when N pressure variation trends all increase, it represents an operation of "releasing a terminal lock", otherwise it presents an operation of "locking a terminal"; and when N pressure variation trends are not consistent, corresponding operations (such as closing down, and starting a camera) are executed according to the increased or decreased amount.

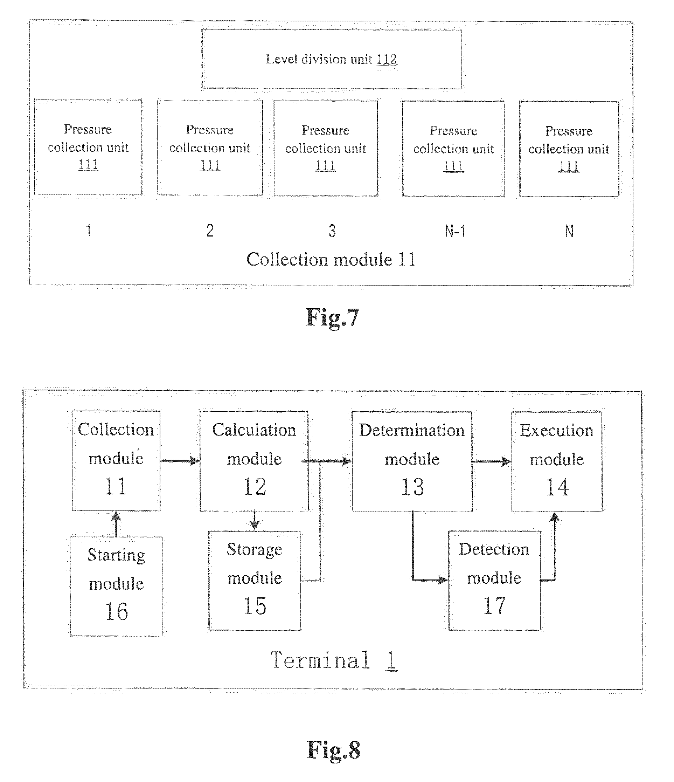

In order to manage the multiple pressure collection units 111, the present application adds a control level division function, as shown in Fig. 7.

Fig. 7 is a structure diagram of a collection module 11 in the terminal 1 as shown in Fig. 1; it can be from Fig. 7 that in an embodiment, on the basis of Fig. 6, a level division unit 112 is added to the collection module 11, and the level division unit 112 is configured to set the priority of each pressure collection unit 111; and the pressures collected by pressure collection units 111 of different priorities are calculated, and the acquired pressure information corresponds to control operation commands of different levels.

Now in terms of example, the pressure collection unit 111 with the number of "1" has a highest priority, and the pressure collection unit 111 with the number of "N" has a lowest priority; supposed that: when the control operation command obtained through calculation according to the pressure collected by the pressure collection unit 111 with the number of "N" is opposite to the control operation command obtained through calculation according to the pressure collected by the pressure collection unit 111 with the number of "1", then the pressure collected by the pressure collection unit 111 with the number of "N" is rejected, but the control operation command which is obtained through calculation according to the pressure collected by the pressure collection unit 111 with the number of "1" is executed;
likewise, the selection of an upper layer application (for example, pressure duration time representing which application is entered) also may be executed according to the control operation command which is obtained through calculation according to the pressure collected by the pressure collection unit 111 with the number of "1", and the control operation (for example, confirmation or cancel) of a lowest layer of the terminal 1 is controlled according to the control operation command which is obtained through calculation according to the pressure collected by the pressure collection unit 111 with the number of "N"; of course, a user also may set the priority and/or control level and/or control operation of each pressure collection unit 111 manually according to requirements, which are not described in the present application again.

The present application also provides an optimal solution of N pressure collection units 111: providing five collection units 111, and providing two pressure collection units 111 at two ends, namely, up and down at the left side of the terminal 1, and providing three pressure collection units 111 uniformly at up, middle and down at the right side of the terminal 1.

In an embodiment, the terminal 1 in the above-mentioned embodiments is one of a mobile phone, a tablet computer and a game machine.

It can be anticipated that the function modules in all of the above-mentioned embodiments may be used in any combination in the case that no conflict mutually exists.

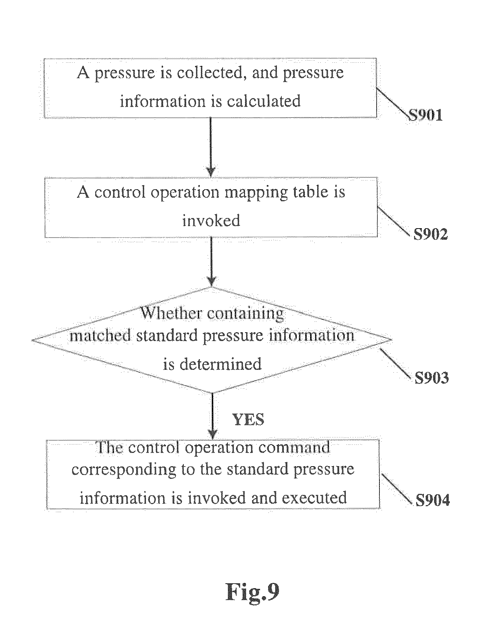

Fig. 8 is a structure diagram of a terminal 1 according to an optimal embodiment of the disclosure; it can be seen from Fig. 8 that in the optimal embodiment, the terminal 1 includes a collection module 11, a calculation module 12, a determination module 13, an execution module 14, a storage module 15, a starting module 16 and a detection module 17, wherein the functions of various functions and connection relationships are consistent with the above text, which will not be described herein; Fig. 9 is a flowchart of a method for controlling a terminal according to an embodiment of the disclosure; hereinafter, the terminal control technology provided in the present application will be further described in combination with Fig. 8 and Fig. 9.

As shown in Fig. 9, in an embodiment, the terminal control method provided in the disclosure includes the following steps:
S901: a pressure is collected, and pressure information is calculated.

The terminal 1 collects the pressure applied to the terminal 1 by a user through the pressure collection unit 111 in the collection module 11; the collection module 11 transmits the collected pressure to the calculation module 12 for calculation so as to obtain pressure information.

The step of the terminal 1 starting the pressure module 11 to perform pressure collection through the starting module 16 before collecting pressure is further comprised, specifically being:
The operation of collecting pressure can be performed by a single pressure collection unit 111 performs pressure collection.

The operation of collecting pressure can be performed by two or more than two pressure collection units 111.

When two or more than two pressure collection units 111 perform pressure collection, the process of determining whether the control operation mapping table contains standard pressure information matching the pressure information is:
It is determined whether the pressure information of the multiple collection units 111 is matched;
if it is matched, then further determining whether the operation mapping table contains standard pressure information corresponding to at least one item of pressure information in each collection unit or the pressure information of all collection units; if information exists, then executing the control operation command corresponding to the standard pressure information.

Further, before collecting pressure, the step of setting the priority of each pressure collection unit 111 is further comprised; according to the pressure collected by the pressure collection units of different priorities, control operation commands of different application levels corresponding to the acquired pressure information are calculated.

S902: a control operation mapping table is invoked.

The control operation mapping table contains at least one item of standard pressure information and a control operation command corresponding to the standard pressure information; a corresponding manner is: one item of standard pressure information corresponds to a control operation command, or one item of standard pressure information corresponds to multiple control operation commands, or multiple standard pressure information corresponds to a control operation command.

Further, the step of establishing a control operation mapping table is further comprised before collecting pressure.

The step of establishing the control operation mapping table specifically includes:
the collection module 11 acquires the control operation command, and acquires the standard pressure information corresponding to each control operation command which is input by a user;
the calculation module 12 establishes a corresponding relationship between the control operation command and the standard pressure information; and
according to the corresponding relationship, the storage module 15 establishes the control operation mapping table, which for the determination module 13 to invoke.

S903: whether the control operation mapping table contains standard pressure information matching the received pressure information is determined; and if exists, then step S904 is executed.

The determination module 13 invokes the control operation mapping table, and determines whether the control operation mapping table contains standard pressure information matching the pressure information, and 100% matching degree does not required, and upper and lower error of 10% is considered to be matched successfully.

Further, if standard pressure information matching the pressure information exists, before executing the control operation command corresponding to the standard pressure information, further includes:
It is determined whether a trigger condition of the control operation command is satisfied; and
if the trigger condition is satisfied, then executing the control operation command.

Further, the trigger condition includes at least one of a terminal running state, terminal location information and terminal motion information.

S904: the control operation command corresponding to the standard pressure information is invoked and executed.

Before executing the control operation command corresponding to the standard pressure information, the following steps is further comprised:
the detection module 17 detects whether the control operation command contains the trigger condition;
if the trigger condition exists, then the detection module 17 determines whether the trigger condition required by the control operation command is satisfied;
if the trigger condition is satisfied, then the execution module 14 is notified to execute the control operation command; and
if the trigger condition is not satisfied, then the execution module 14 is not notified to execute the control operation command.

Further, in the operation method for controlling the terminal as shown in the above-mentioned embodiments, the pressure information is a pressure value and/or pressure variation trend and/or pressure duration time.

Now, the terminal control technology provided by the present application is further described through an application instance:
a user starts the application through the starting module 16;
the collection module 11 collects the pressure applied to the terminal 1 by the user;
the calculation module 12 calculates and generates pressure information according to the pressure collected by the collection module 11; now there are two pressure collection units 111; the pressure information obtained by calculating the pressure collected by two pressure collection units 111 is matched, and the matching is successful;
the determination module 13 invokes the control operation mapping table stored in the storage module 15;
the determination module 13 determines whether the control operation mapping table contains standard pressure information corresponding to the pressure information; if exists, then the control operation command corresponding to the standard pressure information is invoked, for example, the pressure information after successful matching corresponds to the control operation of "answering a call";
the detection module 17 detects whether the trigger condition of the control operation command (answering a call) is satisfied, and supposed that the trigger condition of answering a call is that the distance from the terminal 1 to ears is less than 1 cm, and the terminal 1 is in a standby state;
the detection module 17 determines whether the trigger condition is satisfied, and if satisfied, then the control operation command is transferred to the execution module 14; if not satisfied, then the control operation command is rejected or the execution module 14 is disabled;
the execution module 14 executes a received control operation command, such as answering a call; and
the collection module 11 continues to collect pressure.

The present application provides a computer application program, and the program is used to realize the terminal control method provided in the present application.

The present application provides a storage medium, and the storage medium is used for storing a computer application program for realizing the terminal control method provided in the present application which is provided in the above-mentioned embodiments; in other embodiments, the storage medium is a mobile storage medium, such as a CD, a DVCD and a USB flash disk.

It can be seen from the above recorded solution that by implementing the application, at least the following significant progress:
The terminal control technology provided in the present application controls a terminal to execute operations by collecting pressure on the terminal by a user, and a terminal user can use it in any environment and does not influence others, which has good versatility; and at the same time, the user can control the terminal with one hand, which avoids the problem in the prior art that a user needs two hands to control a terminal, and enhances usage experience of the user;
further, through setting different control levels by the user, multiple control operations may be realized, which is not inferior to the existing terminal control technology and has larger versatility.

The foregoing descriptions are merely exemplary embodiments of the disclosure, and are not to limit the closure in any form; any simple amendment, equivalent variation or modification still falls within the protection scope of the disclosure.

### Industrial Applicability

The technical solution provided in the present disclosure may be applied in a mobile terminal, and the terminal is controlled to execute operations by collecting pressure on the terminal by a user, and a terminal user can use it in any environment and does not influence others, which has good versatility; and further, the user can control the terminal with one hand, which avoids the problem in the prior art that a user needs two hands to control a terminal, and enhances usage experience of the user.

## Claims

1. An operation method for controlling a terminal, **characterized by** comprising:
collecting pressure acting upon the terminal and obtaining pressure information by calculating the pressure;
invoking a control operation mapping table, wherein the control operation mapping table contains at least one item of standard pressure information and a control operation command corresponding to the standard pressure information;
determining whether the control operation mapping table contains standard pressure information matching the pressure information, if the standard information exists, invoking and executing the control operation command corresponding to the standard pressure information.

2. The operation method according to claim 1, **characterized in that** a step of establishing the control operation mapping table is further comprised before collecting the pressure, and the step comprises:
acquiring the control operation command, and acquiring the standard pressure information corresponding to each control operation command which is input by a user;
establishing a corresponding relationship between the control operation command and the standard pressure information; and
establishing the control operation mapping table according to the corresponding relationship.

3. The operation method according to claim 1, **characterized in that** if the standard pressure information matching the pressure information exists, before executing the control operation command corresponding to the standard pressure information, further comprising:
determining whether a trigger condition of the control operation command is satisfied; and
when the trigger condition is satisfied, executing the control operation command.

4. The operation method according to claim 3, **characterized in that** the trigger condition comprises at least one of the following: a running state of the terminal, location information of the terminal and motion information of the terminal.

5. The operation method according to claim 1, **characterized in that** the operation of collecting pressure acting upon the terminal is performed by a single pressure collection unit.

6. The operation method according to claim 1, **characterized in that** the operation of collecting pressure acting upon the terminal is performed by two or more than two pressure collection units.

7. The operation method according to claim 6, **characterized in that** when two or more than two pressure collection units perform pressure collection, the process of determining whether the control operation mapping table contains standard pressure information matching the pressure information comprises:
determining whether the pressure information of multiple collection units are matched;
when the pressure information are matched, determining whether the operation mapping table contains standard pressure information corresponding to at least one piece of pressure information in each collection unit or corresponding to the pressure information of all collection units; if the standard pressure information exists, then executing the control operation command corresponding to the standard pressure information.

8. The operation method according to claim 6, **characterized in that** a step of setting the priority of each pressure collection unit is further comprised; the pressure collected by the pressure collection units of different priorities are calculated to obtain the pressure information, which corresponds to the control operation commands of different application levels.

9. The operation method according to any one of claims 1-8, **characterized in that** the pressure information is a pressure value and/or pressure variation trend and/or pressure duration time.

10. A terminal, **characterized by** comprising a collection module, a calculation module, a determination module and an execution module, wherein the collection module, calculation module, determination module and execution module are successively connected in sequence;
the collection module is configured to collect the pressure acting upon the terminal, and transmit the collected pressure to the calculation module;
the calculation module is configured to calculate the received pressure to obtain pressure information corresponding to the pressure, and transmit the pressure information to the determination module;
the determination module is configured to invoke a control operation mapping table, and determine whether the control operation mapping table contains standard pressure information matching the received pressure information, if the standard information exists, then transmit a control operation command corresponding to the standard pressure information to the execution module, wherein the control operation mapping table contains at least one item of standard pressure information and the control operation command corresponding to the standard pressure information; and
the execution module is configured to receive and execute the control operation command transmitted by the determination module.

11. The terminal according to claim 10, **characterized in that** the terminal further comprises a storage module;
the collection module is further configured to acquire a control operation command, and acquire standard pressure information corresponding to each control operation command which is input by a user, and transmit the control operation command and the standard pressure information corresponding to the control operation command to the calculation module;
the calculation module is further configured to establish a corresponding relationship between the control operation command and standard pressure information according to the received control operation command and the standard pressure information corresponding to the control operation command, and transmit the corresponding relationship to the storage module; and
the storage module is configured to establish a control operation mapping table according to the corresponding relationship.

12. The terminal according to claim 10, **characterized in that** the terminal further comprises a detection module;
the detection module is connected to the determination module, and configured to, when the determination module determines that the standard pressure information matching the pressure information exists and before the control operation command corresponding to the standard pressure information is executed, detect whether the trigger condition of the control operation command is satisfied; and if satisfied, then notify the execution module to execute the control operation command.

13. The terminal according to claim 10, **characterized in that** the collection module contains one pressure collection unit, and the pressure collection unit is set to collect the pressure acting upon the terminal.

14. The terminal according to claim 10, **characterized in that** the collection module contains at least two pressure collection units, and the pressure collection units are configured to collect the pressure acting upon the terminal.

15. The terminal according to claim 14, **characterized in that** the collection module further comprises a level division unit, and the level division unit is configured to set the priority of each pressure collection unit; and the pressures collected by pressure collection units of different levels are calculated, and the acquired pressure information corresponds to control operation commands of different levels.

16. The terminal according to any one of claims 10 to 15, **characterized in that** the terminal is one of the following: a mobile phone, a tablet computer and a videogame machine.
